# EUROPEAN PATENT APPLICATION

(11) **EP 4 407 773 A1**
(43) Date of publication of application: **31.07.2024**
(21) Application number: 23759021.1
(22) Date of filing: 09.02.2023
(51) Int. Cl.: H01M 50/35, H01M 50/204, H01M 50/30

(54) **SMOKE EXHAUST SYSTEM FOR ENERGY STORAGE DEVICE, ENERGY STORAGE DEVICE, AND ELECTRICAL DEVICE**

(30) Priority: 24.02.2022 CN 202220381226 U
(71) Applicant: Contemporary Amperex Technology Co., Limited, Ningde, Fujian 352100 (CN)
(72) Inventor: WANG, Xuehui, Ningde, Fujian 352100 (CN); JIN, Qiu, Ningde, Fujian 352100 (CN); CHEN, Xiaobo, Ningde, Fujian 352100 (CN)
(74) Representative: Behr, Wolfgang
(86) International application number: PCT/CN2023/075093
(87) International publication number: WO 2023/160396

(57) **Abstract**

This application relates to an exhaust system for an energy storage device, an energy storage device, and an electrical device. When thermal runaway occurs inside a battery cabinet (20) of the energy storage device (100), high-temperature fumes can be expelled directionally into a corresponding exhaust assembly through an exhaust port (21) under the action of a guide assembly (40), and then expelled out of a box (10) through the exhaust assembly, thereby implementing directional exhaustion of the high-temperature fumes in the battery cabinet (20), avoiding explosion of the battery cabinet (20) or secondary hazards, and improving safety performance of the energy storage device (100).

## Description

### CROSS-REFERENCE TO RELATED APPLICATIONS

This application claims priority to Chinese Patent Application No. 202220381226.0, filed on February 24, 2022 and entitled "EXHAUST SYSTEM FOR ENERGY STORAGE DEVICE, ENERGY STORAGE DEVICE, AND ELECTRICAL DEVICE", which is incorporated herein by reference in its entirety.

### TECHNICAL FIELD

This application relates to the technical field of energy storage batteries, in particular, to an exhaust system for an energy storage device, an energy storage device, and an electrical device.

### BACKGROUND

With the vigorous development of renewable energy, an energy storage device is required to alleviate the pressure of a power grid in smoothing out peak loads and regulating frequencies. Among various energy storage methods, electrochemical energy storage is one of the most rapidly developing energy storage methods. Due to the large amount of organic electrolyte solution inside a battery, a battery energy storage device in use is prone to incur some safety hazards. When the temperature uniformity between batteries is low or when a battery is overcharged or overdischarged, thermal runaway may occur inside the battery. The thermal runaway of the battery is accompanied by a large amount of high-temperature flammable fumes that may lead to battery explosions or other secondary hazards, thereby impairing the safety performance of the energy storage device.

### SUMMARY

In view of the situation above, it is necessary to provide an exhaust system for an energy storage device, an energy storage device, and an electrical device to exhaust the fumes in the energy storage device.

According to a first aspect, this application provides an exhaust system for an energy storage device. The energy storage device includes a box and at least two battery cabinets disposed in the box. An exhaust port is created on each battery cabinet.

The exhaust system includes: an exhaust assembly, communicating with each of the exhaust ports sequentially, and configured to collect fumes expelled from the exhaust ports; and at least two guide assemblies, where each guide assembly is disposed between one of the exhaust ports and the exhaust assembly in communication with the exhaust port, and is configured to expel the fumes in the battery cabinet out of the box unidirectionally from the exhaust assembly through the exhaust port.

In the technical solution of an embodiment of this application, by controlling the guide assembly disposed between the battery cabinet and the exhaust assembly connected to the battery cabinet, the opening/closing of the passage is controlled between the exhaust port on the battery cabinet and the exhaust assembly in communication with the exhaust port. In this way, high-temperature flammable fumes inside the battery cabinet can be expelled unidirectionally out of the box from the exhaust assembly through the exhaust port. When the fumes in the battery cabinet are expelled, an independent exhaust channel is formed between an individual battery cabinet and the outside of the box at the same time, so that the exhaustion of the fumes does not affect other normally operating battery cabinets in the box.

In some embodiments, the exhaust assembly includes at least two branch pipes. One end of each branch pipe communicates with one of the exhaust ports, and another end of the branch pipe extends out of the box.

Each guide assembly is disposed between one of the exhaust ports and the branch pipe in communication with the exhaust port, and is configured to expel the fumes in the battery cabinet out of the box unidirectionally from the branch pipe.

In the technical solution of this embodiment of this application, the exhaust assembly employs pipes. Each pipe corresponds to an exhaust port. In this way, the fumes in each battery cabinet are expelled separately through a corresponding pipe. The battery cabinets expel fumes without mutual interference, and are highly independent.

In some embodiments, the exhaust assembly includes a main pipe. All the branch pipes communicate with the main pipe and extend out of the box through the main pipe.

In the technical solution of this embodiment of this application, a main-branch pipeline layout is implemented, so that each battery cabinet can be fitted with a branch pipe separately, and the operation is simple. In addition, all the branch pipes converge into the main pipe, and the fumes are expelled out of the box in a unified manner, thereby making the pipe structure in the box clearer and more reasonable.

In some embodiments, the exhaust assembly includes at least one partition plate. Each of the partition plates includes an inner cavity configured to temporarily store fumes. Each inner cavity communicates with an exterior of the box.

Each exhaust port communicates with the inner cavity of at least one partition plate. Each guide assembly is disposed between one of the exhaust ports and the inner cavity in communication with the exhaust port, and is configured to expel the fumes in the battery cabinet out of the box unidirectionally from the partition plate.

In the technical solution of this embodiment of this application, each partition plate can correspond to a plurality of battery cabinets for expelling fumes. The fumes at each exhaust port are expelled unidirectionally by the guide assembly in one-to-one correspondence. In this way, the arrangement of the partition plate further simplifies the internal structure of the box on the basis of implementing unidirectional exhaustion of the fumes in the battery cabinet.

In some embodiments, each guide assembly includes an exhaust valve. The exhaust valve is configured to control the opening/closing of the passage between each exhaust port and the exhaust assembly in communication with the exhaust port.

In the technical solution of this embodiment of this application, by controlling the exhaust valve, the opening/closing of the passage is controlled between each exhaust port and the exhaust assembly in communication with the exhaust port, thereby implementing independent exhaustion of fumes for each individual battery cabinet.

In some embodiments, each guide assembly further includes a connecting piece. The exhaust valve is disposed in the connecting piece. One end of the connecting piece along an extension direction of the connecting piece communicates with a corresponding exhaust port, and another end of the connecting piece communicates with a corresponding exhaust assembly.

In the technical solution of this embodiment of this application, the connecting piece plays a role in hermetic connection, makes it more convenient to implement detachable connection between the exhaust assembly and the battery cabinet, and is conveniently operable.

In some embodiments, each guide assembly includes a protection piece hermetically disposed at a corresponding exhaust port. The protection piece is able to be detached from the exhaust port under an impact force of the fumes in a corresponding battery cabinet.

In the technical solution of this embodiment of this application, the protection piece forms a fragile configuration on the outside of the battery cabinet. When the battery cabinet is operating normally, the protection piece prevents external gas or fumes from entering the battery cabinet from the exhaust port. When fumes are generated inside the battery cabinet, the protection piece can be detached from the exhaust port under the impact force of the fumes, thereby implementing unidirectional exhaustion of the fumes from inside the battery cabinet and diffusion of the fumes to the branch pipes.

In some embodiments, the protection piece is made of an aluminum laminated film.

In the technical solution of this embodiment of this application, on the one hand, the aluminum laminated film plays a protective role for the exhaust port, and prevents external fumes from entering the battery cabinet from the exhaust port. On the other hand, the fumes in the battery cabinet can directly burst through the aluminum laminated film to implement directional exhaustion.

According to a second aspect, this application provides an energy storage device. The energy storage device includes a box, an battery cabinet disposed in the box, a control module, and the exhaust system disclosed above. The exhaust system implements communication between the battery cabinet and the exterior of the box. The control module is communicatively connected to the exhaust system.

According to a third aspect, this application provides an electrical device, including an electrical main body and the energy storage device disclosed above.

In the exhaust system for an energy storage device, the energy storage device, and the electrical device, when thermal runaway occurs inside a battery cabinet of the energy storage device, high-temperature fumes can be expelled directionally into a corresponding exhaust assembly through an exhaust port under the action of a guide assembly, and then expelled out of the box through the exhaust assembly, thereby implementing directional exhaustion of the high-temperature fumes in the battery cabinet, avoiding explosion of the battery cabinet or secondary hazards, and improving safety performance of the energy storage device.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of embodiments, a person of ordinary skill in the art becomes clearly aware of various other advantages and benefits. The drawings are merely intended to illustrate the embodiments, but not to limit this application. In all the drawings, the same reference numeral represents the same component. In the drawings:
FIG. 1 is a schematic structural diagram of an energy storage device according to an embodiment of this application;
FIG. 2 is a schematic structural diagram of an energy storage device according to an embodiment of this application;
FIG. 3 is a schematic structural diagram of an exhaust system according to an embodiment of this application;
FIG. 4 is a schematic structural diagram of an energy storage device according to another embodiment of this application;
FIG. 5 is a close-up view of a position A shown in FIG. 4;
FIG. 6 is a schematic structural diagram of an exhaust system according to another embodiment of this application;
FIG. 7 is a schematic structural diagram of connection between a battery cabinet and an exhaust assembly according to an embodiment of this application;
FIG. 8 is a schematic structural diagram of a battery cabinet according to an embodiment of this application; and
FIG. 9 is a close-up view of a part B shown in FIG. 8.

List of reference numerals: 100. energy storage device; 200. exhaust system; 10. box; 20. battery cabinet; 40. guide assembly; 50. main pipe; 21. exhaust port; 31. branch pipe; 32. main pipe; 33. partition plate; 41. exhaust valve; 42. connecting piece; 43. protection piece; 331. inner cavity.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

An energy storage device is mainly intended for supplying power to large-scale electrical equipment, and a majority of energy storage devices do not need to move. Therefore, for an energy storage battery in an energy storage device, just the power density needs to be adjusted depending on the energy storage scenario, but typically no direct requirement is imposed on the energy density. For energy storage scenarios of power grid peak shaving, off-grid photovoltaic energy storage, or user-side electricity price difference between peak and valley periods, the energy storage battery is usually charged or discharged continuously for at least two hours. Therefore, a capacity-type battery with a charge-discharge rate less than or equal to 0.5 C is applicable to such scenarios. For energy storage scenarios of power frequency regulation or smoothing fluctuations in renewable energy, the energy storage battery needs to be charged and discharged quickly in a period as short as seconds or minutes, and therefore, a power-type battery is applicable to with a charge-discharge rate greater than or equal to 2 C is applicable to such scenarios.

The applicant has noticed that the energy storage device generates a large amount of heat during use, giving rise to an increase in safety hazards. When the temperature uniformity between a plurality of batteries is low or when a battery is overcharged or overdischarged, thermal runaway inside the battery may result in local smoke or even fire. An existing energy storage device does not provide a corresponding directional exhaust system. Therefore, the high-temperature flammable fumes caused by thermal runaway of the battery are unable to be expelled directionally. Therefore, the high-temperature flammable fumes are either retained inside the battery box, or expelled into the energy storage device through an explosion-proof valve of the battery box. When the high-temperature flammable fumes are retained inside the battery box, the strength of the battery box is limited, and an explosion of the battery box is prone to occur. When the high-temperature flammable fumes are expelled directly into the energy storage device, the high-temperature flammable fumes may impact the surrounding normally operating battery boxes, and give rise to occurrence of secondary hazards.

To implement directional exhaustion of high-temperature flammable fumes in the battery box, the applicant hereof has found that a special-purpose exhaust assembly may be designed for each battery box inside the energy storage device. Through a corresponding guide assembly disposed, the high-temperature flammable fumes in the battery box can be expelled directionally into a corresponding exhaust assembly, and then expelled out of the energy storage device through the exhaust assembly.

In this way, when high-temperature flammable fumes are generated by one or more battery boxes due to thermal runaway, the fumes can be expelled out of the energy storage device through the exhaust assembly that is correspondingly connected to the battery box. The fumes are prevented from accumulating inside the battery box and giving rise to an explosion of the battery box, and the fumes are prevented from diffusing into the energy storage device from the battery box and giving rise to secondary hazards, thereby improving safety performance of the energy storage device.

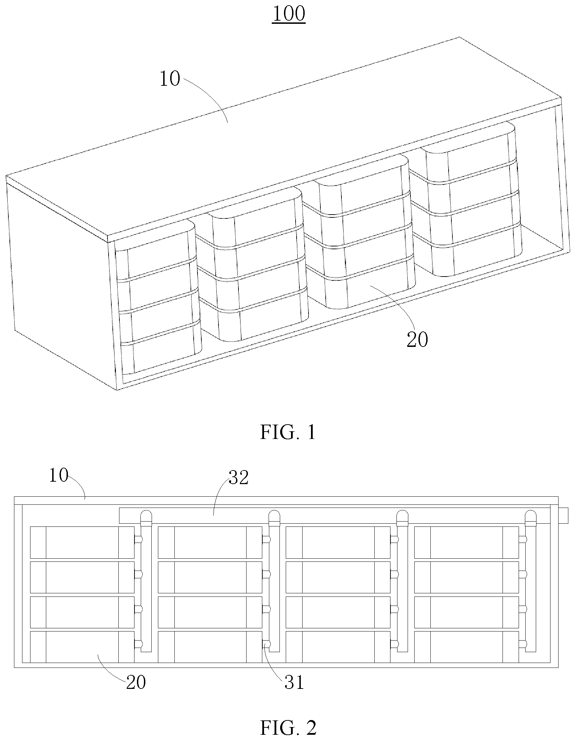

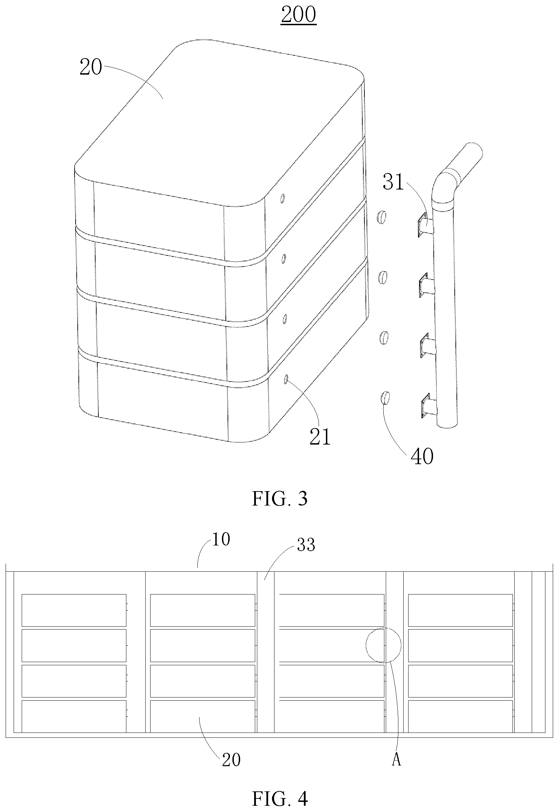

Referring to FIG. 1, FIG. 2, and FIG. 3, FIG. 1 and FIG. 2 are schematic structural diagrams of an energy storage device according to an embodiment of this application, and FIG. 3 is a schematic structural diagram of an exhaust system according to an embodiment of this application. An embodiment of this application provides an exhaust system 200 for an energy storage device 100. The energy storage device 100 includes a box 10 and at least two battery cabinets 20 disposed in the box 10. An exhaust port 21 is created on each battery cabinet 20. The exhaust system 200 includes an exhaust assembly and at least two guide assemblies 40. The exhaust assembly communicates with each of the exhaust ports 21 sequentially, and is configured to collect fumes expelled from the exhaust ports 21. Each guide assembly 40 is disposed between one of the exhaust ports 21 and the exhaust assembly in communication with the exhaust port, and is configured to expel the fumes in the battery cabinet 20 out of the box 10 unidirectionally from the exhaust assembly through the exhaust port 21.

Specifically, the box 10 of the energy storage device 100 may assume a container structure. All the battery cabinets 20 are arranged and accommodated inside the container structure to form an integral structure, thereby facilitating supply of power to external electrical devices. The battery cabinets 20 located inside the container structure are a main structure for implementing the supply of power. Therefore, the specific number of battery cabinets 20 may be set based on the power of the electrical devices.

An exhaust port 21 is created on each battery cabinet 20. The exhaust assembly is one-to-one connected to the exhaust port 21 on each battery cabinet 20. Each guide assembly 40 is one-to-one disposed between the exhaust port 21 and the exhaust assembly. By controlling the guide assembly 40 disposed between the battery cabinet 20 and the exhaust assembly connected to the battery cabinet, the opening/closing of the passage is controlled between the exhaust port 21 on the battery cabinet 20 and the exhaust assembly in communication with the exhaust port.

When high-temperature flammable fumes are generated by thermal runaway inside a battery cabinet 20, the exhaust port 21 on the battery cabinet 20 and the exhaust assembly connected to the exhaust port are opened so that the high-temperature flammable fumes inside the battery cabinet 20 can be expelled unidirectionally out of the box 10 from the exhaust assembly through the exhaust port 21. Therefore, when the fumes in the battery cabinet 20 are expelled, an independent exhaust channel is formed between an individual battery cabinet 20 and the outside of the box 10 at the same time, so that the exhaustion of the fumes does not affect other normally operating battery cabinets 20 in the box 10.

It is hereby noted that the guide assembly 40 may be controlled manually or may be controlled automatically through connection to an external control module. When the guide assembly 40 is controlled automatically, the fume indicator of each battery cabinet 20 may be detected by the control module. When the fume indicator of a battery cabinet 20 is detected as abnormal, the control module controls the guide assembly 40 corresponding to the battery cabinet 20, and controls the opening/closing of the exhaust assembly corresponding to that battery cabinet 20, thereby implementing exhaustion of the fumes of the specified battery cabinet 20.

Specifically, in an embodiment, the control module may use a battery management system (BMS). When detecting that thermal runaway occurs inside a battery cabinet 20, the BMS sends a signal. Upon receiving the signal, the guide assembly 40 opens automatically to implement directional exhaustion of fumes of the battery cabinet 20.

It is hereby noted that the battery management system (BMS for short) is primarily configured to perform intelligent management and maintenance for the battery.

In some embodiments, the exhaust assembly includes at least two branch pipes 31. One end of each branch pipe 31 communicates with one of the exhaust ports 21, and another end of the branch pipe extends out of the box 10. Each guide assembly 40 is disposed between one of the exhaust ports 21 and the branch pipe 31 in communication with the exhaust port, and is configured to expel the fumes in the battery cabinet 20 out of the box 10 unidirectionally from the branch pipe 31.

Specifically, the number of branch pipes 31 corresponds to the number of exhaust ports 21 on the battery cabinet 20. One branch pipe 31 corresponds to one exhaust port 21. In other words, each exhaust port 21 and a branch pipe 31 connected to the exhaust port together form an independent exhaust channel. In this way, the fumes of each battery cabinet 20 can be exhausted independently. Each guide assembly 40 controls the opening/closing of one exhaust channel, so that the fumes of each battery cabinet 20 can be exhausted independently, thereby implementing a safer process of exhausting the fumes of the battery cabinet 20.

In some embodiments, the exhaust assembly includes a main pipe 32. All the branch pipes 31 communicate with the main pipe 32 and extend out of the box 10 through the main pipe 32. One end of each branch pipe 31 is connected to a corresponding battery cabinet 20, and the other end of each branch pipe is connected to the main pipe 32, thereby implementing a main-branch pipeline layout. Each battery cabinet 20 can be fitted with a branch pipe 31 separately, and the operation is simple. In addition, all the branch pipes 31 converge into the main pipe 32, and the fumes are uniformly expelled out of the box 10, thereby making the pipe structure in the box 10 clearer and more reasonable.

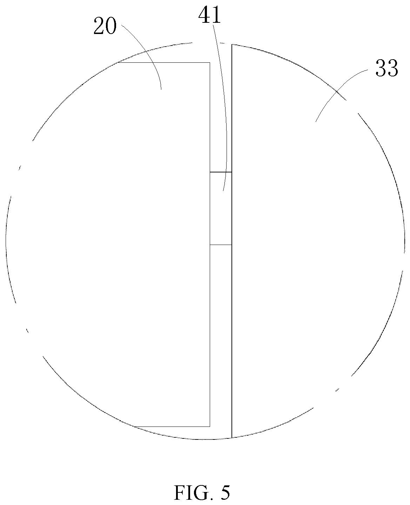

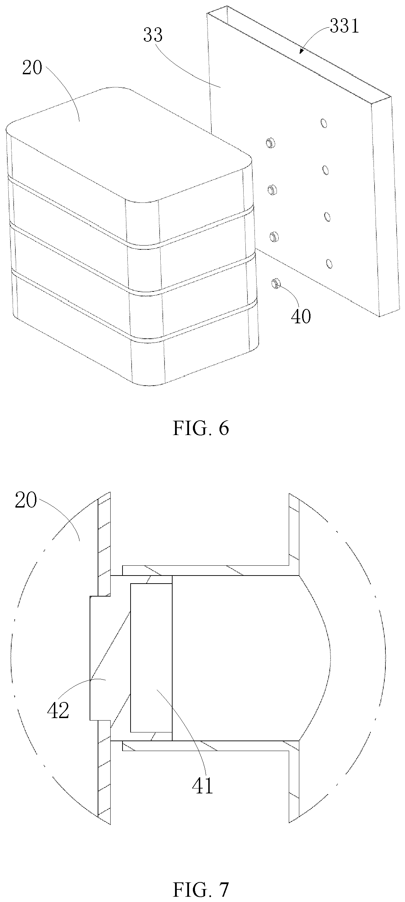

Referring to FIG. 4, FIG. 5, and FIG. 6, FIG. 4 is a schematic structural diagram of an energy storage device according to an embodiment of this application, FIG. 5 is a close-up view of a part B shown in FIG. 4, and FIG. 6 is a schematic structural diagram of an exhaust system 200 according to an embodiment of this application. In some embodiments, the exhaust assembly includes at least one partition plate 33. Each of the partition plates 33 includes an inner cavity 331 configured to temporarily store fumes. Each inner cavity 331 communicates with the exterior of the box 10. Each exhaust port 21 communicates with the inner cavity 331 of at least one partition plate 33. Each guide assembly 40 is disposed between one of the exhaust ports 21 and the inner cavity 331 in communication with the exhaust port, and is configured to expel the fumes in the battery cabinet 20 out of the box 10 unidirectionally from the partition plate 33.

Specifically, in order to improve the space utilization rate inside the box 10, the plurality of battery cabinets 20 are stacked in sequence to form a battery cabinet group, and then a plurality of battery cabinet groups are spaced apart horizontally inside the box 10. Further, a partition plate 33 is disposed in a gap between every two adjacent battery cabinet groups. An exhaust port 21 may be created on a side of each battery cabinet 20 in the battery cabinet group, the side being oriented toward the partition plate 33. The exhaust port 21 communicates with the inner cavity 331 of the partition plate 33. The guide assembly 40 is disposed between each exhaust port 21 and the inner cavity 331 in communication with the exhaust port.

In addition, the inner cavity 331 of each partition plate 33 communicates with the exterior of the box 10. In this way, after the fumes in the battery cabinet 20 are expelled into the inner cavity 331 of the partition plate 33 through the exhaust port 21, the fumes are expelled out of the box 10 from the inner cavity 331. In a specific embodiment, a through-hole (not shown in the drawing) connecting the inner cavity 331 of the partition plate 33 to the exterior of the box 10 may be created on the box 10 at a position corresponding to the partition plate 33. A control valve is disposed in the through-hole to control the opening/closing of the passage between the inner cavity 331 and the exterior of the box 10. Alternatively, in some other embodiments, other similar structures may be used to implement the communication between the inner cavity 331 and the exterior of the box 10, the details of which are omitted here.

Referring to FIG. 7, FIG. 7 is a schematic structural diagram of connection between an exhaust port and an exhaust assembly according to an embodiment of this application. In some embodiments, each guide assembly 40 includes an exhaust valve 41. The exhaust valve 41 is configured to control the opening/closing of the passage between each exhaust port 21 and the exhaust assembly in communication with the exhaust port. Specifically in this embodiment, the exhaust valve 41 is a one-way exhaust valve 41 so as to be able to implement unidirectional exhaustion of the fumes from inside the battery cabinet 20 into the corresponding exhaust assembly.

More specifically, the exhaust valve 41 may be an electrical control valve, and is communicatively connected to the BMS. In this way, when detecting that thermal runaway occurs inside a battery cabinet 20, the BMS sends a signal. Upon receiving the signal, the electrical control valve opens automatically to implement directional exhaustion of fumes of the battery cabinet 20.

In some embodiments, each guide assembly 40 further includes a connecting piece 42. The exhaust valve 41 is disposed in the connecting piece 42. One end of the connecting piece 42 along an extension direction of the connecting piece communicates with a corresponding exhaust port 21, and the other end of the connecting piece communicates with a corresponding exhaust assembly. Specifically in this embodiment, the connecting piece 42 is a hollow cylindrical deflector hood. The exhaust valve 41 is fixedly disposed in the deflector hood. One end of the deflector hood communicates with a corresponding exhaust port 21, and the other end of the deflector hood communicates with a corresponding exhaust assembly. The deflector hood plays a role in hermetic connection, makes it more convenient to implement detachable connection between the exhaust assembly and the battery cabinet 20, and is conveniently operable.

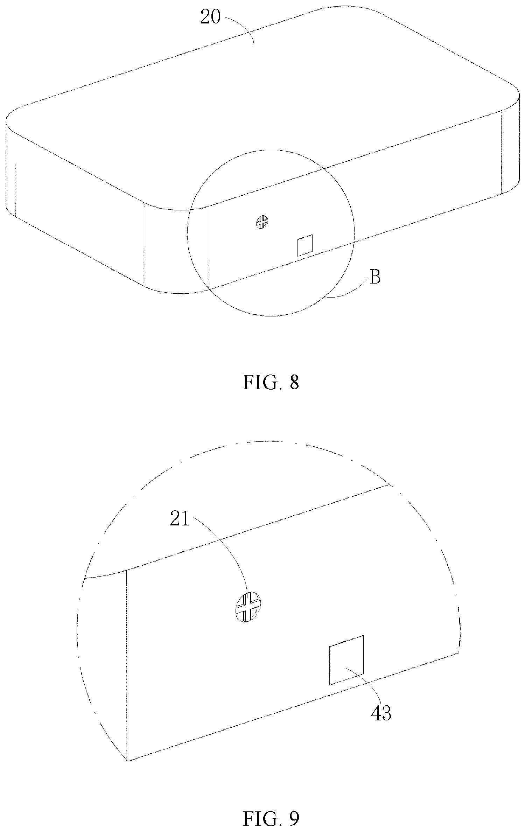

Referring to FIG. 8 and FIG. 9, FIG. 8 is a schematic structural diagram of a battery cabinet according to an embodiment of this application, and FIG. 9 is a close-up view of a part B shown in FIG. 8. In some embodiments, each guide assembly 40 includes a protection piece 43 hermetically disposed at a corresponding exhaust port 21. The protection piece 43 is able to be detached from the exhaust port 21 under an impact force of the fumes in a corresponding battery cabinet 20. The protection piece 43 forms a fragile configuration on the outside of the battery cabinet 20. When the battery cabinet 20 is operating normally, the protection piece 43 prevents external gas or fumes from entering the battery cabinet 20 from the exhaust port 21. When fumes are generated inside the battery cabinet 20, the protection piece 43 can be detached from the exhaust port 21 under the impact force of the fumes, thereby implementing unidirectional exhaustion of the fumes from inside the battery cabinet 20 and diffusion of the fumes to the branch pipes 30.

Specifically, the protection piece 43 is made of an aluminum laminated film. The aluminum laminated film is hermetically bonded to the position of the exhaust port 21. When thermal runaway occurs inside the battery cabinet 20, the fumes in the battery cabinet 20 directly burst through the aluminum laminated film and are expelled out of the box 10 through the branch pipe 30. On the one hand, the aluminum laminated film plays a protective role for the exhaust port 21, and prevents external fumes from entering the battery cabinet 20 from the exhaust port 21. On the other hand, the fumes in the battery cabinet 20 can directly burst through the aluminum laminated film to implement directional exhaustion.

Based on the same conception as the exhaust system 200 above, this application provides an energy storage device 100. The energy storage device includes a box 10, a battery cabinet 20 disposed in the box 10, a control module (not shown in the drawing), and the exhaust system 200 disclosed above. The exhaust system 200 implements communication between the battery cabinet 20 and the exterior of the box 10. The control module is communicatively connected to the exhaust system 200.

To facilitate the control of the exhaustion of the fumes, the control module is disposed to control the opening and closing of the exhaust valve 41 corresponding to each battery cabinet 20, thereby controlling the opening/closing of the passage between each battery cabinet 20 and the corresponding exhaust assembly. In this way, the exhaustion of the fumes of the battery cabinet 20 can be controlled automatically.

Specifically, the control module may be a BMS, and the exhaust valve 41 is an electrical control valve. When detecting that thermal runaway occurs inside a battery cabinet 20, the BMS sends a signal and locks the position of the battery cabinet 20. Upon receiving the signal, the electrical control valve opens automatically to implement directional exhaustion of fumes of the battery cabinet 20.

Based on the same conception as the energy storage device 100, this application provides an electrical device including an electrical main body and the energy storage device 100 disclosed above.

In specific use of this application, each branch pipe 31 is connected to a corresponding battery cabinet 20. All the branch pipes converge into the main pipe 32 communicating to the outside of the box 10. Alternatively, each battery cabinet 20 communicates with the inner cavity 331 of a partition plate 33 through an exhaust valve 41, and communicates to the outside of the box 10 through a through-hole on the box 10.

When thermal runaway occurs in a battery cabinet 20, the BMS locks the position of the battery cabinet 20 and transmits a signal to the electrical control valve. Upon receiving the signal, the electrical control valve opens automatically to implement directional exhaustion of fumes of the battery cabinet 20. In this way, the fumes in the battery cabinet 20 are expelled, thereby preventing the battery cabinet 20 from exploding due to insufficient strength. In addition, the exhaust channel of each battery cabinet 20 is independent. Therefore, the exhaustion of fumes is prevented from affecting other normally operating battery cabinets 20 in the box 10, thereby improving the safety performance of the overall structure of the energy storage device 100.

The exhaust system 200 for an energy storage device 100, the energy storage device 100, and the electrical device in the foregoing embodiments exhibit at least the following advantages:
(1) The guide assembly 40 implements directional exhaustion of the fumes from inside the battery cabinet 20 to the outside of the box 10, ensures stability of the pressure inside the battery cabinet 20, and avoids explosion caused by failure to expel the fumes in the battery cabinet 20;
(2) Each branch pipe 31 is disposed corresponding to one battery cabinet 20, so that the fumes inside each battery cabinet 20 can be expelled out of the box 10 independently without affecting normal operation of other battery cabinets 20 in the box 10, thereby improving the overall safety performance of the energy storage device 100; and
(3) A main-branch pipeline layout is implemented, in which the branch pipes 31 are connected to the main pipe 32, so that each battery cabinet 20 can be fitted with a branch pipe 31 separately, thereby simplifying and facilitating the operation.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An exhaust system for an energy storage device, wherein the energy storage device comprises a box and at least two battery cabinets disposed in the box, and an exhaust port is created on each battery cabinet, and the exhaust system comprises:
an exhaust assembly, communicating with each of the exhaust ports sequentially, and configured to collect fumes expelled from the exhaust ports; and
at least two guide assemblies, wherein each guide assembly is disposed between one of the exhaust ports and the exhaust assembly in communication with the exhaust port, and is configured to expel the fumes in the battery cabinet out of the box unidirectionally from the exhaust assembly through the exhaust port.

2. The exhaust system according to claim 1, wherein the exhaust assembly comprises at least two branch pipes, one end of each branch pipe communicates with one of the exhaust ports, and another end of the branch pipe extends out of the box; and
each guide assembly is disposed between one of the exhaust ports and the branch pipe in communication with the exhaust port, and is configured to expel the fumes in the battery cabinet out of the box unidirectionally from the branch pipe.

3. The exhaust system according to claim 2, wherein the exhaust assembly comprises a main pipe, and all the branch pipes communicate with the main pipe and extend out of the box through the main pipe.

4. The exhaust system according to any one of claims 1 to 3, wherein the exhaust assembly comprises at least one partition plate, each of the partition plates comprises an inner cavity configured to temporarily store fumes, and each inner cavity communicates with an exterior of the box; and
each exhaust port communicates with the inner cavity of at least one partition plate, and each guide assembly is disposed between one of the exhaust ports and the inner cavity in communication with the exhaust port, and is configured to expel the fumes in the battery cabinet out of the box unidirectionally from the partition plate.

5. The exhaust system according to any one of claims 1 to 4, wherein each guide assembly comprises an exhaust valve, and the exhaust valve is configured to control opening/closing of a passage between each exhaust port and the exhaust assembly in communication with the exhaust port.

6. The exhaust system according to claim 5, wherein each guide assembly further comprises a connecting piece, the exhaust valve is disposed in the connecting piece, one end of the connecting piece along an extension direction of the connecting piece communicates with a corresponding exhaust port, and another end of the connecting piece communicates with a corresponding exhaust assembly.

7. The exhaust system according to any one of claims 1 to 6, wherein each guide assembly comprises a protection piece hermetically disposed at a corresponding exhaust port, and the protection piece is able to be detached from the exhaust port under an impact force of the fumes in a corresponding battery cabinet.

8. The exhaust system according to claim 7, wherein the protection piece is made of an aluminum laminated film.

9. An energy storage device, comprising a box, an battery cabinet disposed in the box, a control module, and the exhaust system according to any one of claims 1 to 8, wherein the exhaust system implements communication between the battery cabinet and an exterior of the box, and the control module is communicatively connected to the exhaust system.

10. An electrical device, comprising an electrical main body and the energy storage device according to claim 9.
